# EUROPEAN PATENT APPLICATION

(11) **EP 1 311 136 A1**
(43) Date of publication of application: **14.05.2003**
(21) Application number: 01309529.4
(22) Date of filing: 12.11.2001
(51) Int. Cl.: H04Q 7/38, H04Q 7/32

(54) **Authentication in telecommunications networks**

(71) Applicant: LUCENT TECHNOLOGIES INC., Murray Hill, New Jersey 07974-0636 (US)
(72) Inventor: Enderes, Thomas, Swindon, Wiltshire SN5 5FJ (GB); Moreton, Michael, Marlborough, Wiltshire SN8 1BT (GB); Moyse, Roderick, Malmesburry, Wiltshire SN16 7DJ (GB)
(74) Representative: Sarup, David Alexander

(57) **Abstract**

A method of making a call-connection of a user terminal to a second network comprises providing authentication data to the uscr terminal via an authenticated call-connection with a first network. It also requires selectively allowing call-connection to the second network dependent on said authentication data.

## Description

### Technical Field

The present invention relates to a method of making a call-connection, and to a telecommunications system.

### Background of the Invention

When a user wishes to use a commercial communications network, the network must authenticate the user (i.e. it must be convinced that they are who they claim to be), so that the bill can be assigned to the correct person. This is especially true of networks where there is no physical connection to the user (e.g. cellular and wireless networks).

Authentication (proving to the network that you are who you are) is very important to wireless network operators as it allows them to bill users, and to prevent non-subscribers from accessing the system. Such authentication is normally carried out when the user connects to the network.

Encryption is important to users for security reasons, but has an additional advantage to the operator in that it prevents a third party from taking over an already authenticated connection. So encryption provides continuing authentication, which again is important for billing.

In general, for a user to authenticate themselves to the network, they must be in possession of some sort of secret key (e.g. a password, or the SIM card in a mobile phone) that only themselves and the network have access to.

In existing cellular networks such as Global System for Mobiles GSM and Universal Mobile Telecommunications System UMTS authentication is achieved by a subscriber identity module SIM card in the mobile knowing an individual secret code only known to it and the core of the cellular network. The secret code allows the mobile to respond correctly to authentication challenges, and to set encryption keys correctly for the call-connection. The user does not have access to the secret code itself as it is hidden inside the SIM. For example, in GSM, the network sends a random value to the phone. The SIM card then uses this value, along with the secret key to generate a response, and an encryption key to encrypt further communications. The network generates these values in the same way, and for communication to continue, the returned response must be correct, and the data must be encrypted in the correct way. In reality, it is often possession of the encryption key that is important in authenticating the user, the secret key simply being a way of generating an encryption key in a secure manner.

On the other hand in existing data networks (including wireless data networks), authentication is at best similar to that used in cellular networks. However, the secret code is normally input by the user, rather than being hidden from them. This is a less secure solution, and more difficult to administer.

Many cellular operators wish to provide a service where the user can make use of either cellular, or wireless data networking techniques such as IEEE specification for wireless LAN 802.1 1b. However, the poorer security of wireless data networks compared to cellular networks is unattractive, and the need for the user to manually administer additional secrets for data access is unattractive.

### Summary of the Invention

The present invention provides a method of making a call-connection of a user terminal to a second network comprising the steps of providing authentication data to the user terminal via an authenticated call-connection with a first network, and selectively allowing call-connection to the second network dependent on said authentication data.

Advantages of the present invention in its preferred embodiments are that using a connection over an authenticated network to pass proof of identity for authentication on another network or networks is a simple but powerful technique. The presence of an existing authenticated connection is readily useable to authenticate the user for an additional network. By passing encryption keys, or authentication secrets, for the additional network over the existing network, unauthorised users can be prevented from accessing the additional network. Also the resulting security levels achieved for wireless LAN networks can be as good as for cellular networks.

Preferably the allowing is undertaken by the second network. Preferably the authentication data is also provided to the second network by another path for comparison with the authentication data received from the terminal.

Preferably the authentication data comprises a secret key code.

Preferably the authentication data comprises an encryption key code for encrypting call messages.

Preferably the authentication data is periodically updated. Furthermore preferably authentication for the additional network is automatic, and preferably does not require manual intervention.

Preferably the first network is a mobile telecommunications network. For example a Global System for Mobiles GSM network, a Universal Mobile Telecommunications System UMTS network, or other third generation mobile network.

Preferably the second network is a wireless local area network LAN, such as in accordance with IEEE Specification for wireless Local Area Networks 802.11b.

Preferably upon the call-connection to the second network being made, the user terminal remains in simultaneous call-connection with both the first network and the second network. Alternatively, the call-connection to the first network is terminated upon the call-connection to the second network being made.

The present invention also relates to corresponding apparatus.

The present invention also provides a telecommunications system comprising a first network and a second network, and at least one user terminal call-connectable to either network, the terminal being operative in authenticated call-connection with the first network to receive authentication data, the second network comprising means operative to selectively allow call-connection to the second network dependent on said authentication data.

Preferably the system further comprising an authentication server operative to provide the authentication data to the terminal.

### Brief Description of the Drawings

A preferred embodiment of the present invention will now be described by way of example and with reference to the drawings, in which:

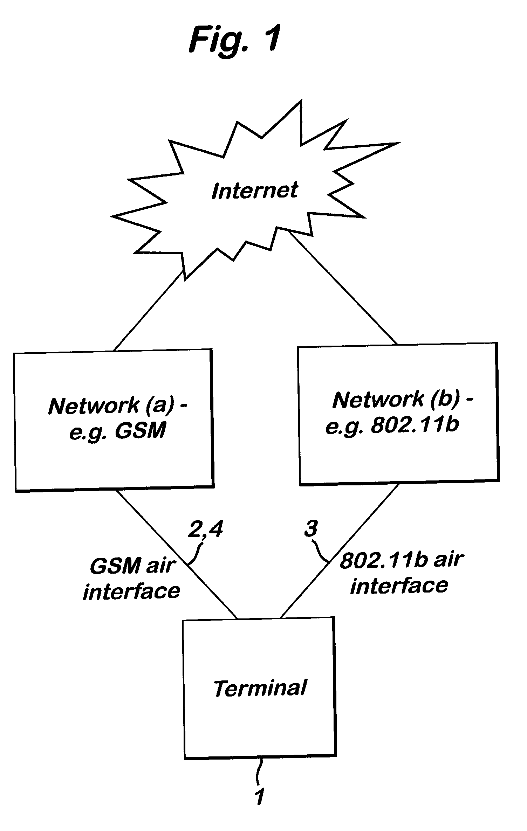

Figure 1 is a diagrammatic illustration of a terminal connected to two networks.

### Detailed Description

As shown in Figure 1, a terminal 1 is provided that has the capability to connect via respective interfaces 2,3 to two networks, either simultaneously, or by alternating. The networks are denoted (a) and (b) respectively. Network (a) is a Global System for Mobiles GSM network. Network (b) is Wireless Local Area Network LAN.

In operation, the terminal 1 is initially connected to network (a), and that network (a) uses authentication and encryption to provide a secure data path 4. The terminal uses this secure data path 4 to download security information that will allow it to establish a connection using network (b). This information could be for example a secret key, password, or encryption key.

The following sequence of steps take place:-
(1) The terminal 1 sets up a secure, authenticated, encrypted data connection over network (a).
(2) The terminal 1 uses that connection to communicate with an authentication server(not shown) which resides in network (a), and is given a secret key to use when establishing a connection over network (b).
(3) The authentication server informs network (b) of the secret key to be used by the terminal 1. This is important as both network (b) and the terminal 1 must have the same secret key in order to set-up a connection.
(4) The terminal 1 decides to make use of network (b). This is triggered in various ways such as user initiated or caused by the movement of the terminal 1 into an area covered by network (b).
(5) The terminal 1 authenticates itself to network (b) and sets up an encryption key using whatever method is in use on network (b). The important factor is that it is only possession of the correct secret key that allows the terminal to calculate the correct security responses, and to generate the correct encryption key to use.
(6) The terminal 1 now has a secure, authenticated, encrypted connection over network (b).

In an alternative embodiment, the authentication server in network (a) queries network (b) for the secret key to use rather than simply instructing network (b) of the secret key to use.

In some embodiments the networks are of the same type whereas in other embodiments they are different. The networks can be fixed, or mobile such as cellular networks or wireless local area networks.

## Claims

1. A method of making a call-connection of a user terminal to a second network comprising the steps of providing authentication data to the user terminal via an authenticated call-connection with a first network, and selectively allowing call-connection to the second network dependent on said authentication data.

2. A method of making a call-connection according to claim 1, in which the allowing is undertaken by the second network.

3. A method of making a call-connection according to claim 2, in which the authentication data is also provided to the second network by another path for comparison with the authentication data received from the terminal.

4. A method of making a call-connection according to any preceding claim, in which the authentication data comprises a secret key code.

5. A method of making a call-connection according to any preceding claim, in which the authentication data comprises an encryption key code for encrypting call messages.

6. A method of making a call-connection according to any preceding claim in which the authentication data is periodically updated.

7. A method of making a call-connection according to any preceding claim, in which the first network is a mobile telecommunications network.

8. A method of making a call-connection according to any preceding claim, in which the second network is a wireless local area network LAN.

9. A method of making a call-connection according to any preceding claim, in which upon the call-connection to the second network being made the user terminal remains in simultaneous call-connection with both the first network and the second network.

10. A telecommunications system comprising a first network and a second network, and at least one user terminal call-connectable to either network, the terminal being operative in authenticated call-connection with the first network to receive authentication data, the second network comprising means operative to selectively allow call-connection to the second network dependent on said authentication data.
